# EUROPÄISCHE PATENTANMELDUNG

(11) **EP 0 621 289 A1**
(43) Veröffentlichungstag der Anmeldung: **26.10.1994**
(21) Anmeldenummer: 94106202.8
(22) Anmeldetag: 21.04.1994
(51) Int. Cl.: C08F 218/08, C09J 131/02

(54) **Verwendung wässriger Vinylester-Copolymer-Dispersionen als Klebemittel**

(30) Priorität: 22.04.1993 DE 4313206
(71) Anmelder: Wacker-Chemie GmbH, D-81737 München (DE)
(72) Erfinder: Haas, Wolfgang, Dr., D-84503 Altötting (DE); Steinert, Wolfram, Dr., D-51467 Bergisch-Gladbach (DE); Weissgerber, Rudolf, Dr., D-84489 Burghausen (DE)

(57) **Zusammenfassung**

Gegenstand der Erfindung ist die Verwendung von wäßrigen Vinylester-Copolymer-Dispersionen als Klebemittel, welche während der Verarbeitung leicht abwaschbar sind, aber wasserfeste Verklebungen bilden, wobei die Vinylester-Copolymer-Dispersionen im Emulsionspolymerisationsverfahren in Gegenwart von 1 bis 10 Gew%, bezogen auf das Gesamtgewicht der Comonomeren, thermisch vernetzbaren Comonomeren und von 1 bis 15 Gew%, bezogen auf das Gesamtgewicht der Comonomeren, wasserlöslichem Schutzkolloid hergestellt werden.

## Beschreibung

Die Erfindung betrifft die Verwendung von wäßrigen Vinylester-Copolymer-Dispersionen als Klebemittel, welche während der Verarbeitung leicht abwaschbar sind, aber wasserfeste Verklebungen bilden.

Die Verwendung von wäßrigen Vinylester-Copolymer-Dispersionen als Klebemittel ist bekannt. Ein Verfahren zur Herstellung von wäßrigen Dispersionen von Vinylacetat-Ethylen-Copolymeren wird beispielsweise in der DE-C 1127085 beschrieben. Zur Verbesserung der Wasserfestigkeit von Verklebungen, welche mit Vinylester-Copolymer-Dispersionen hergestellt werden, wird die Copolymerisation mit N-Methylolacrylamid vorgeschlagen. Die DE-A 2512589 (US-A 4044197) beschreibt Vinylacetat-Ethylen-Copolymere mit N-Methylolacrylamid-Einheiten, welche bei Erwärmung naßfeste Verklebungen und Beschichtungen bilden. Aus der EP-A 433957 (CA-A 2032720) ist bekannt, daß N-Methylolacrylamid enthaltende Vinylestercopolymerisate, welche auf Polyvinylalkohol aufgepfropft sind, Verklebungen mit ausgezeichneter Wasserfestigkeit ergeben.

Bei der maschinellen Verarbeitung von solchen Klebemitteln kommt es zur Verunreinigung der Verarbeitungsmaschinen und Auftragsgeräte, wie Rakel, Düsen oder Siebdruckmaschinen.

Die Entfernung von angetrockneten Klebstoffresten, vor allem solcher von Klebemitteln, die wasserfeste Verklebungen bilden, ist problematisch. Wünschenswert wäre eine schnelle, einfache und umweltneutrale Reinigung der Geräte mit Wasser ohne den Einsatz von Lösungsmitteln. Voraussetzung dafür ist, daß der aus dem Klebemittel gebildete Polymerfilm eine ausgeprägte Wasserempfindlichkeit aufweist. Genau dies ist jedoch bei Klebemitteln zur Herstellung von wasserfesten Verklebungen nicht der Fall.

Denkbar wäre es, zur Lösung dieser Problematik die Vinylester-Copolymerdispersionen mit wasserlöslichen, hoch- oder niedermolekularen Verbindungen zu modifizieren, um so Klebemittel mit ausgeprägter Wasserempfindlichkeit des Polymerfilms zu formulieren. Neben dem Nachteil des zusätzlichen Formulierungsschrittes würden damit zwar Klebemittel mit guter Reinigungsfähigkeit geschaffen, die Wasserresistenz der Verklebung ginge damit allerdings zwangsläufig verloren.

Es bestand daher die Aufgabe, Klebemittel auf Basis wäßriger Vinylester-Copolymer-Dispersionen zur Verfügung zu stellen, die trotz einer guten Entfernbarkeit von Verschmutzungen mit Wasser zu Verklebungen mit hoher Wasserfestigkeit führen.

Die Aufgabe wurde dadurch gelöst, daß als Klebemittel wäßrige Dispersionen von Vinylester-Copolymerisaten mit N-Methylol-Funktionen, welche in Gegenwart von wasserlöslichen Schutzkolloiden polymerisiert werden, verwendet werden.

Aus dem Stand der Technik ist lediglich bekannt, N-Methylolgruppenhaltige Vinylacetat-Ethylen-Copolymerisate in Gegenwart von teilhydrolisiertem Polyvinylalkohol zu polymerisieren, um Klebemittel mit niederem Weißpunkt zu erhalten (EP-A 385734). Weiter ist aus der EP-A 153728 bekannt, Vinylacetat-Ethylen-Copolymerisate in Gegenwart von teilhydrolisiertem Polyvinylalkohol zu polymerisieren, um damit mit Polyvinylalkohol mischbare Copolymerdispersionen zu erhalten, welche sich als wasserfeste Klebemittel mit langer "offener Zeit" verwenden lassen.

überraschenderweise wurde gefunden, daß bei der Verwendung von N-Methylol-funktionellen Copolymeren die Wasserempfindlichkeit des Polymerfilms ausgeprägter wird. Nach thermischer Behandlung findet eine Vernetzung statt, die zur Wasserresistenz führt.

Gegenstand der Erfindung ist die Verwendung von wäßrigen Vinylester-Copolymer-Dispersionen als Klebemittel, welche während der Verarbeitung leicht abwaschbar sind, aber wasserfeste Verklebungen bilden, wobei die Vinylester-Copolymer-Dispersionen im Emulsionspolymerisationsverfahren in Gegenwart von 1 bis 10 Gew%, bezogen auf das Gesamtgewicht der Comonomeren, thermisch vernetzbaren Comonomeren und von 1 bis 15 Gew%, bezogen auf das Gesamtgewicht der Comonomeren, wasserlöslichem Schutzkolloid hergestellt werden.

Vorzugsweise werden die Vinylester-Copolymer-Dispersionen durch Copolymerisation eines Monomerengemisches hergestellt, enthaltend
a) 50 bis 99 Gew% eines oder mehrerer Vinylester von geradkettigen oder verzweigten, aliphatischen Carbonsäuren mit 1 bis 18 C-Atomen,
b) 0 bis 50 Gew% Ethylen,
c) 0 bis 20 Gew% eines oder mehrerer Ester von ungesättigten Mono- oder Dicarbonsäuren mit aliphatischen Alkoholen mit 1 bis 10 C-Atomen,
d) 0 bis 4 Gew% mehrfach ethylenisch ungesättigte Comonomere,
e) 0,5 bis 10 Gew% eines oder mehrerer thermisch vernetzbarer Comonomere aus der Gruppe der N-Methylol-(Meth)acrylamide und N-Methylolallylcarbamate sowie deren Alkylether bzw. Alkylester, Acrylamidoglykolsäure und deren Alkylester,
f) 0 bis 5 Gew% einer oder mehrerer ethylenisch ungesättigter Mono- oder Dicarbonsäuren sowie deren Amide,
g) 0 bis 5 Gew% eines oder mehrerer ethylenisch ungesättigter Sulfonate, Phosphonate oder deren Salze.

Besonders bevorzugt ist die Copolymerisation von
a) 65 bis 98 Gew% eines oder mehrerer Vinylester aus der Gruppe Vinylacetat, Vinylpropionat, Isopropenylacetat, Vinyl-2-ethylhexanoat, Vinyllaurat, Versaticsäure^{R}-Vinylester mit 9 bis 10 C-Atomen,
b) 2 bis 35 Gew% Ethylen,
c) 0 bis 20 Gew% eines oder mehrerer Ester aus der Gruppe Methyl(meth)acrylat, Ethyl(meth)acrylat, Isopropyl-(meth)acrylat, n-Butyl(meth)acrylat, t-Butyl(meth)-acrylat, Ethylherylacrylat, Diisopropylmaleat, Diisopropylfumarat,
d) 0 bis 4 Gew% eines oder mehrerer Monomere aus der Gruppe Divinyladipat, Diallylmaleat, Allylmethacrylat, Triallylcyanurat,
e) 1 bis 7 Gew% eines oder mehrerer Monomere aus der Gruppe N-Methylol(meth)acrylamid, N-(isobutoxymethyl)-(meth)-acrylamid, Acrylamidoglykolsäure, Methylamidoglykolsäure-Methylester,
f) 0 bis 5 Gew% eines oder mehrerer Comonomere aus der Gruppe Acrylsäure, Methacrylsäure, Fumarsäure und deren Amide,
g) 0 bis 5 Gew% Vinylsulfonat und/oder 2-Acrylamido-2-methylpropansulfonat.

Die oben genannten Angaben in Gew% beziehen sich jeweils auf das Gesamtgewicht der Comonomeren. Vorzugsweise wird die Auswahl der Comonomeren so getroffen, daß ein Copolymerisat mit einer T_{g} von -25°C bis +35°C resultiert.

Am meisten bevorzugte Vinylester-Copolymerisate enthalten:
75 bis 97 Gew% Vinylester, insbesonders Vinylacetat, sowie 3 bis 25 Gew% Ethylen und 1 bis 7 Gew% N-Methylolacrylamid, oder
50 bis 70 Gew% Vinylester, insbesonders Vinylacetat, 5 bis 29 Gew% Vinylester einer α-verzweigten Carbonsäure, insbesonders VeoVa9^{R} und/oder VeoVa10^{R}, 3 bis 25 Gew% Ethylen und 1 bis 7 Gew% N-Methylolacrylamid oder
50 bis 70 Gew% Vinylester, insbesonders Vinylacetat, 1 bis 20 Gew% Acrylsäureester, insbesonders n-Butylacrylat oder 2-Ethylhexylacrylat, 3 bis 25 Gew% Ethylen und 1 bis 7 Gew% N-Methylolacrylamid. Die Angaben in Gew% addieren sich jeweils auf 100 Gew%.

Die Herstellung der Vinylester-Copolymerisate erfolgt nach dem Emulsionspolymerisationsverfahren. Die Polymerisation erfolgt in Gegenwart von vorzugsweise 3 bis 9 Gew%, bezogen auf das Gesamtgewicht der Comonomeren, eines oder mehrerer wasserlöslicher Schutzkolloide aus der Gruppe teilverseifte Polyvinylalkohole mit einem Hydrolysegrad von 60 bis 95 %, vollverseifte Polyvinylalkohole mit einem Hydrolysegrad von 96 bis 99 %, Stärke, Cellulose, wasserlösliche Celluloseether wie Hydroxyethyl-, Hydroxypropyl-, Methyl-, Carboxymethylcellulose, Polyvinylpyrrolidon. Insbesondere werden wasserlösliche, teilverseifte Polyvinylalkohole mit einem Hydrolysegrad von 60 bis 95 % verwendet.

Die Polymerisation kann diskontinuierlich oder kontinuierlich, mit oder ohne Verwendung von Saatlatices, unter Vorlage aller oder einzelner Bestandteile des Reaktionsgemisches oder unter teilweiser Vorlage und Nachdosierung der oder einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente. In einer besonders bevorzugten Ausführungsform wird das wasserlösliche Schutzkolloid teilweise vorgelegt und das restliche Schutzkolloid zusammen mit den vernetzbaren Comonomeren e) nach Initiierung der Polymerisation zudosiert.

Die Polymerisation wird in einem Temperaturbereich von 0 bis 100°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Ammonium-, Natrium- und Kaliumpersulfat, -peroxodisulfat; Wasserstoffperoxid; Alkylhydroperoxide, wie tert.-Butylhydroperoxid; Kalium-, Natrium- und Ammoniumperoxodiphosphat; Azoverbindungen, wie Azobisisobutyronitril oder Azobiscyanovaleriansäure. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Formaldehydsulfoxylat-Salze, Hydroymethansulfinat oder Ascorbinsäure. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren eingesetzt werden. Vorzugsweise werden 0,5 bis 7 Gew%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Der für die Polymerisation gewünschte pH-Bereich, der im allgemeinen zwischen 2,5 und 10, vorzugsweise 3 und 8, liegt, kann in bekannter Weise durch Säuren, Basen oder übliche Puffersalze, wie Alkaliphosphate, Alkaliacetate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe, zugesetzt werden.

Durch die Verwendung von N-Methylolacrylamidhaltigen Vinylester-Copolymerisaten, welche in Gegenwart von wasserlöslichen schutzkolloiden hergestellt werden, werden Klebemittel zugänglich, welche nach Trocknung bei Raumtemperatur einen innerhalb der zum Reinigen benötigten Zeit leicht mit kaltem Wasser abwaschbaren Polymerfilm ergeben. Wird die Trocknung des Films, das heißt die Herstellung des Endproduktes, bei erhöhter Temperatur vorgenommen, bildet sich ein wasserfester Film, während die nicht hitzebeladenen Verschmutzungen, beispielsweise an den Verarbeitungsmaschinen, mit Wasser leicht entfernbar sind. Die Wasserfestigkeit des Polymerfilms erhöht sich ebenfalls bei Lagerung bei Raumtemperatur über mehrere Tage, so daß sich Endprodukte mit guter Wasserfestigkeit der Verklebung ergeben.

Bei der erfindungsgemäßen Verwendung wird das Klebemittel in bekannter Weise, beispielsweise mit Rakel oder Düse auf das zu verklebende Substrat aufgetragen. Vor dem Vernetzungsschritt lassen sich die mit Klebemittel verunreinigten Geräte problemlos reinigen. Die Vernetzung erfolgt üblicherweise durch Temperaturbehandlung bei 100 bis 170°C über einen Zeitraum von 5 Sekunden bis 5 Minuten. Bevorzugte Verwendungen sind die Verwendung als Klebemittel zur Herstellung von Verpackungen und die Verwendung als Klebemittel zur Herstellung von Polymerschäumen mittels expandierbaren Mikroperlen. Besonders bevorzugt ist die Verwendung als Klebemittel zur Herstellung von Polymerschäumen auf Tapeten oder auf Bodenbelägen mit expandierbaren Mikroperlen.

Die nachfolgenden Beispiele dienen der weiteren Erläuterung der Erfindung.

### Herstellung der Klebemittel:

### Beispiel 1:

In einem Druckreaktor, der mit Rührer, Zudosiermöglichkeiten, Vakuum-, Ethylen-, Stickstoffleitungen sowie Heiz- und Kühlmöglichkeiten versehen war, wurden 44,8 kg vollentsalztes Wasser, 9,8 kg einer 25 %igen Lösung eines ethoxilierten Nonylphenols mit im Mittel 23 Ethylenoxideinheiten und 56,4 kg einer 10 %igen Lösung eines teilverseiften Polyvinylalkohols (Hydrolysegrad etwa 88 %, Höppler-Viskosität von 25 mPas in einer 4 %igen Lösung in Wasser bei 20°C) vorgelegt, mit Essigsäure der pH auf 4 gestellt und 0,47 kg einer 1 %igen Eisenammoniumsulfat-Lösung zugegeben. Nach Stickstoffspülung wurden 23,7 kg Vinylacetat einemulgiert, die Vorlage auf 65°C aufgeheizt und der Ethylendruck auf 22 bar eingestellt. Die Polymerisation wurde durch Zudosieren von jeweils 11,9 kg einer 3 %igen Peroxodisulfatlösung und einer 1,5 %igen Na-Hydroxymethansulfinat-Lösung initiiert. Nach Beginn der Initiatordosierung wurden 213,3 kg Vinylacetat und eine Mischung von 89,3 kg einer 10 %igen Lösung des obengenannten teilverseiften Polyvinylalkohols und von 9,5 kg einer 50 %igen Lösung von N-Methylolacrylamid zudosiert. Nach Reaktionsende wurde der Ansatz abgekühlt und abgeblasen. Es wurde mit 0,133 kg t-Butylhydroperoxid und 0,052 kg Na-Hydroxymethansulfinat jeweils in 0,97 kg Wasser nachpolymerisiert.
Die erhaltene Dispersion hatte einen Endfestgehalt von 51,2 %. Das Copolymerisat war zusammengesetzt aus 93 Gew% Vinylacetat, 5 Gew% Ethylen und 2 Gew% N-Methylolacrylamid. Die Dispersion wurde auf einen Festgehalt von 50 % und einen pH von 4 eingestellt; die Viskosität (Brookfield 20 Upm) betrug 19000 mPas.

### Vergleichsbeispiel 1:

Es wurde analog Beispiel 1 vorgegangen mit dem Unterschied, daß kein N-Methylolacrylamid copolymerisiert wurde. Die erhaltene Dispersion hatte einen Endfestgehalt von 52,6 %. Das Copolymerisat war zusammengesetzt aus 94 Gew% Vinylacetat und 6 Gew% Ethylen. Die Dispersion wurde auf einen Festgehalt von 50 % und einen pH von 4 eingestellt; die Viskosität (Brookfield 20 Upm) betrug 19000 mPas.

### Anwendungstechnische Prüfung:

Zur Prüfung der Wasserfestigkeit der Polymerfilme wurden die Dispersionen mit einer Dicke von 250 µm auf eine Glasplatte aufgetragen. Die Filme wurden bei einer Temperatur von 23°C bei 50 % relativer Luftfeuchtigkeit über 2 Stunden, 1 Tag, 4 Tage, 7 Tage oder 14 Tage getrocknet. In einem weiteren Versuch wurden die Filme 4 Minuten lang bei 130°C getrocknet. Die Beurteilung der Wasserfestigkeit erfolgte qualitativ, nach Aufbringen eines Wassertropfens und Reiben mit dem Finger, nach folgender Beurteilungsskala:
- 1 =: Film reemulgiert sofort,
- 2 =: Film reemulgiert nach längerem Reiben,
- 3 =: Film reemulgiert schlecht, wird beim Reiben zerstört,
- 4 =: Film läuft trüb an, wird beim Reiben nicht zerstört,
- 5 =: Film leicht getrübt, wird beim Reiben nicht zerstört.

Die Ergebnisse der anwendungstechnischen Prüfung sind in Tabelle 1 zusammengefaßt.

**Tabelle 1**

| Beurteilung Trocknung | 2 Std. 23°C | 1 Tag 23°C | 2 Tage 23°C | 7 Tage 23°C | 14 Tage 23°C | 4 Min. 130°C |
|---|---|---|---|---|---|---|
| Beispiel 1 | 1 | 2 | 3 | 4 | 4 | 4 |
| Vergl.bsp. 1 | 4 | 4 | 5 | 4 | 5 | 5 |

## Patentansprüche

1. Verwendung von wäßrigen Vinylester-Copolymer-Dispersionen als Klebemittel, welche während der Verarbeitung leicht abwaschbar sind, aber wasserfeste Verklebungen bilden, wobei die Vinylester-Copolymer-Dispersionen im Emulsionspolymerisationsverfahren in Gegenwart von 1 bis 10 Gews%, bezogen auf das Gesamtgewicht der Comonomeren, thermisch vernetzbaren Comonomeren und von 1 bis 15 Gew%, bezogen auf das Gesamtgewicht der Comonomeren, wasserlöslichem Schutzkolloid hergestellt werden.

2. Verwendung nach Anspruch 1, dadurch gekennzeichnet, daß die Vinylester-Copolymer-Dispersionen durch Copolymerisation eines Monomerengemisches hergestellt werden, enthaltend
a) 50 bis 99 Gew% eines oder mehrerer Vinylester von geradkettigen oder verzweigten, aliphatischen Carbonsäuren mit 1 bis 18 C-Atomen,
b) 0 bis 50 Gew% Ethylen,
c) 0 bis 20 Gew% eines oder mehrerer Ester von ungesättigten Mono- oder Dicarbonsäuren mit aliphatischen Alkoholen mit 1 bis 10 C-Atomen,
d) 0 bis 4 Gew% mehrfach ethylenisch ungesättigte Comonomere,
e) 0,5 bis 10 Gew% eines oder mehrerer thermisch vernetzbarer Comonomere aus der Gruppe der N-Methylol(Meth)acrylamide und N-Methylolallylcarbamate sowie deren Alkylether bzw. Alkylester, Acrylamidoglykolsäure und deren Alkylester,
f) 0 bis 5 Gew% einer oder mehrerer ethylenisch ungesättigter Mono- oder Dicarbonsäuren sowie deren Amide,
g) 0 bis 5 Gew% eines oder mehrerer ethylenisch ungesättigter Sulfonate, Phosphonate oder deren Salze.

3. Verwendung nach Anspruch 1, dadurch gekennzeichnet, daß die Vinylester-Copolymer-Dispersionen durch Copolymerisation eines Monomerengemisches hergestellt werden, enthaltend
a) 65 bis 98 Gew% eines oder mehrerer Vinylester aus der Gruppe Vinylacetat, Vinylpropionat, Isopropenylacetat, Vinyl-2-ethylhexanoat, Vinyllaurat, Versaticsäure^{R}-Vinylester mit 9 bis 10 C-Atomen,
b) 2 bis 35 Gew% Ethylen,
c) 0 bis 20 Gew% eines oder mehrerer Ester aus der Gruppe Methyl(meth)acrylat, Ethyl(meth)acrylat, Isopropyl(meth)acrylat, n-Butyl(meth)acrylat, t-Butyl(meth)-acrylat, Ethylherylacrylat, Diisopropylmaleat, Diisopropylfumarat,
d) 0 bis 4 Gew% eines oder mehrerer Monomere aus der Gruppe Divinyladipat, Diallylmaleat, Allylmethacrylat, Triallylcyanurat,
e) 1 bis 7 Gew% eines oder mehrerer Monomere aus der Gruppe N-Methylol(meth)acrylamid, N-(isobutoxymethyl)-(meth)acrylamid, Acrylamidoglykolsäure, Methylamidoglykolsäure-Methylester,
f) 0 bis 5 Gew% eines oder mehrerer Comonomere aus der Gruppe Acrylsäure, Methacrylsäure, Fumarsäure und deren Amide,
g) 0 bis 5 Gew% Vinylsulfonat und/oder 2-Acrylamido-2-methylpropansulfonat.

4. Verwendung nach Anspruch 1 bis 3, dadurch gekennzeichnet, daß die Vinylester-Copolymer-Dispersionen in Gegenwart von 3 bis 9 Gew%, bezogen auf das Gesamtgewicht der Comonomeren, eines oder mehrerer wasserlöslicher Schutzkolloide aus der Gruppe teilverseifte Polyvinylalkohole mit einem Hydrolysegrad von 60 bis 95 %, vollverseifte Polyvinylalkohole mit einem Hydrolysegrad von 96 bis 99 %, Stärke, Cellulose, wasserlösliche Celluloseether, wie Hydroxyethyl-, Hydroxypropyl-, Methyl-, Carboymethylcellulose, Polyvinylpyrrolidon hergestellt werden.

5. Verwendung nach Anspruch 1 bis 4, dadurch gekennzeichnet, daß das wasserlösliche Schutzkolloid teilweise vorgelegt und das restliche Schutzkolloid zusammen mit den vernetzbaren Comonomeren e) nach Initiierung der Polymerisation zudosiert wird.

6. Verwendung nach Anspruch 1 bis 5, dadurch gekennzeichnet, daß das Klebemittel nach Auftragung auf das zu verklebende Substrat durch Wärmebehandlung bei einer Temperatur von 100 bis 170°C vernetzt wird.

7. Verwendung nach Anspruch 1 bis 6, dadurch gekennzeichnet, daß das Klebemittel zur Herstellung von Polymerschäumen mittels expandierbaren Mikroperlen verwendet wird.

8. Verwendung nach Anspruch 7, dadurch gekennzeichnet, daß das Klebemittel zur Herstellung von Polymerschäumen mit expandierbaren Mikroperlen auf Tapeten oder auf Bodenbelägen verwendet wird.
